# EUROPÄISCHE PATENTSCHRIFT

(11) **EP 1 504 198 B1**
(45) Veröffentlichungstag und Bekanntmachung des Hinweises auf die Patenterteilung: **29.11.2006**
(21) Anmeldenummer: 03717270.7
(22) Anmeldetag: 04.04.2003
(51) Int. Cl.: F16B 21/08, F16B 5/06, F16B 2/22

(54) **BEFESTIGUNGSELEMENT**
FASTENING ELEMENT
ELEMENT DE FIXATION

(30) Priorität: 27.04.2002 DE 10218952
(43) Veröffentlichungstag der Anmeldung: 09.02.2005
(73) Patentinhaber: A. Raymond & Cie, 38028 Grenoble (FR)
(72) Erfinder: SASEK, Václav, 460 06 Liberec (CZ); MENZEL, Thomas, 02730 Ebersbach (DE)
(74) Vertreter: Rüttgers, Joachim
(86) Internationale Anmeldenummer: PCT/EP2003/003515
(87) Internationale Veröffentlichungsnummer: WO 2003/093690

(56) Entgegenhaltungen:
- EP-A- 1 074 751
- DE-A- 2 153 062
- DE-U- 20 101 328
- US-A- 2 424 757
- US-A- 4 787 795
- US-A- 5 222 852

## Beschreibung

Die Erfindung betrifft ein Befestigungselement zur Befestigung eines Bauteils an einem Trägerteil mit einem Halterungsteil für das zu befestigende Bauteil und einem Ankerfuß, mit dem das Befestigungselement in einer durchgehenden Bohrung des Trägerteils verankerbar ist, wobei der Ankerfuß einen vom Halterungsteil senkrecht abragenden Schaft und mindestens zwei, einander gegenüberstehende, an ihren einen Enden mit dem Schaftende verbundene und sich in Richtung auf das Halterungsteil aufspreizende Federarme aufweist, an deren Außenflächen durch Stufen zurückgesetzte, einander gegenüberliegende Anlageflächen ausgebildet sind, die beim Einsetzen des Ankerfußes in die Bohrung des Trägerteils, bei gleichzeitigem Hintergreifen des Bohrungsrandes durch die Stufen an der Wand der Bohrung federnd zur Anlage kommen.

Solche Befestigungselemente sind an sich bekannt, sie eignen sich zum überwiegenden Teil aber nur zur Befestigung in einer Bohrung des Trägerteils mit einem bestimmten Durchmesser. Es müssen also für Bohrungen mit davon abweichenden Durchmessern jeweils besondere, daran angepasste Befestigungselemente gefertigt werden.

Durch die DE 201 01 328 U1 ist ein Befestigungselement der oben genannten Art bekannt, bei dem bei der Befestigung eines flächigen Körpers an einem zweiten flächigen Körper mit Hilfe mehrerer solcher Befestigungselemente ein Toleranzausgleich zwischen den Befestigungspunkten möglich ist, indem das Befestigungselement zweiteilig ausgebildet ist und der Ankerfuß im Halterungsteil senkrecht zur Mittelachse beweglich ist. Ein Verdrehen des Ankerfußes im Halterungsteil wird durch seitliche Überstände am Schaft verhindert. Die Außenflächen der Federarme können, aber müssen nicht, durch einen Absatz in zwei Abschnitte unterteilt sein, so dass der eine flächige Körper bei der Montage zu dem anderen flächigen Körper eine Zwischen- oder Vormontagestellung einnehmen kann, in der die Verbindung noch lose, bzw. der eine Körper noch seitlich bewegbar ist. Dazu ist der von den Außenflächen der Federarme bestimmte Durchmesser hinter dem genannten Absatz kleiner als der Durchmesser der Bohrung im Körper, in die der Ankerfuß gesteckt werden soll. Die eigentliche Befestigung kommt dann erst in einem zweiten Schritt zustande, wenn der Rand der Bohrung von einer Stufe am freien Ende der Federarme hintergriffen wird.

Die DE 2 153 062 A1 offenbart ein Befestigungselement, bei dem die freien Enden der aufgespreizten Federarme, wo sie zur Anlage am Rand der Bohrung im Trägerteil zur Anlage kommen sollen, konkav gebogen sind. Damit soll erreicht werden, dass sich dasselbe Befestigungselement zur Verankerung in Bohrungen mit verschiedenen Durchmessern innerhalb eines bestimmten Bereiches eignet. Eine sichere, wackelfreie Verankerung kann mit der kurvigen Anlagefläche der Federarme jedoch nicht erreicht werden; dies liegt auch daran, dass hier nicht die Verankerung in Bohrungen mit verschiedenen Durchmessern bestimmter Größe sondern mit sich über einen Bereich ändernden Durchmessern angestrebt ist. Paarweise seitlich und im rechten Winkel zueinander abstehende Fortsätze am Schaft können ein horizontales Verschieben des Ankerfußes in der Bohrung nur bei einem bestimmten Durchmesser, also einer Bohrung nur einer Größe verhindern. In einer Bohrung mit kleinerem Durchmesser ließe sich das Befestigungselement gar nicht montieren, bei einer Bohrung mit größerem Durchmesser bestünde die Gefahr, dass sich die Federarme auf Grund des seitlichen Spiels des Ankerfußes aushakten.

Durch die US 2,424,757 ist ein Befestigungselement bekannt, mit dem ein zylindrisches Bauteil an einem plattenförmigen Trägerteil befestigt werden kann. Es besteht aus einer Hülse, die auf das zylindrische Bauteil geschoben wird und von der seitlich ein Paar sich aufspreizende Federarme abragen. Die freien Enden dieser Federarme sind mehrfach abgestuft. Damit soll die Verankerung in Trägerteilen unterschiedlicher Dicke ermöglicht werden. An bestimmte, verschiedene Durchmesser der Bohrung könnten sich diese Federarme auch anpassen. Jedoch bestünde auch hier die Gefahr des Aushakens der Federarme.

Aufgabe der Erfindung ist es, ein Befestigungselement der eingangs genannten Art zu schaffen, bei dem der Ankerfuß eine sichere, wackelfreie Verankerung in Bohrungen von mindestens zwei unterschiedlichen Durchmessern gewährleistet und insbesondere ein Aushaken der Federarme bei einer seitlichen Belastung des Befestigungselements ausgeschlossen ist.

Dies wird erfindungsgemäß dadurch erreicht, dass an den sich konisch aufspreizenden Federarmen in verschiedenen, dem Durchmesser unterschiedlich weiter Bohrungen im Trägerteil entsprechenden Höhen durch Stufen radial zurückgesetzte, einander gegenüberliegende Anlageflächen paarweise angeordnet sind, deren Krümmung der der jeweiligen Bohrungswand folgt, und dass der Schaft in denselben Höhen, aber gegenüber den Federarmen um jeweils 90° versetzt, dem Durchmesser derselben unterschiedlich weiten Bohrungen im Trägerteil entsprechende, in ihrer Krümmung der jeweiligen Bohrungswand folgende Anlageflächen aufweist, die beim Einsetzen des Ankerfußes in die Bohrung des Trägerteils an der betreffenden Bohrungswand zur Anlage kommen.

Damit wird das Befestigungselement für Bohrungen mit verschiedenen Durchmessern im Trägerteil einsetzbar; es müssen nicht mehr für jede Bohrungsgröße besondere Befestigungselemente hergestellt und bereit gehalten werden. Gleichzeitig wird erreicht, dass der Ankerfuß des Befestigungselements in jeder der Bohrungen durch mindestens vier an ihm ausgebildeten Anlageflächen sicher und wackelfrei gehalten wird, und zwar auch bei seitlicher Belastung des Ankerfußes; eine Aushaken der Federarme bei seitlicher Belastung wird durch die Anlageflächen am Schaft zuverlässig verhindert.

Nach einer bevorzugten Ausführungsform der Erfindung sind an den Federarmen und dem Schaft Anlageflächen für zwei, besonders gängige, unterschiedliche Bohrungsdurchmesser angeordnet.

Der Schaft ist bevorzugt als zwischen den Federarmen stehender Flachkörper ausgebildet, der sich an seinen beiden Schmalseiten von seinem freien Ende aus konisch bis auf den Durchmesser einer ersten Bohrungsgröße erweitert, daran anschließend einen Abschnitt mit einer teilzylindrischen, der Bohrungswand der ersten Bohrung folgenden Anlagefläche aufweist, dessen Höhe der Dicke des Trägerteils entspricht, sich dann bis auf den Durchmesser einer zweiten Bohrungsgröße erweitert und daran anschließend einen Abschnitt mit einer teilzylindrischen, der Bohrungswand der zweiten Bohrung folgenden Anlagefläche aufweist, dessen Höhe der Dicke des Trägerteils entspricht.

Die Erfindung wird im folgenden anhand der anhängenden Zeichnung näher beschrieben.
- Fig. 1 bis 3: veranschaulichen die Problematik, die mit der Erfindung gelöst wird.

### Weiter zeigen

- Fig. 4: eine dreidimensionale Ansicht des Ankerfußes eines erfindungsgemäßen Befestigungselements,
- Fig. 5: einen Längsschnitt durch den Ankerfuß gemäß Fig. 4,
- Fig. 6: die Wirkung des Ankerfußes nach der Erfindung.

Wie bereits angedeutet, tritt bei Befestigungselementen der genannten Art, insbesondere wenn sie für mehr als einen Bohrungsdurchmesser geeignet sein sollen, eine ganz bestimmte Schwierigkeit auf, die bisher noch nicht zufriedenstellend gelöst werden konnte.

Es gibt an dem in der Bohrung eines Trägerteils verankerten Ankerfuß vier Freiheitsgrade, in denen er sich bewegen kann. Er kann sich
a. in Richtung seiner eigenen Achse bewegen, er kann sich
b. um seine Achse drehen und er kann
c. und d. in der Ebene quer zu seiner Achse in x-Richtung und y-Richtung bewegen bzw. in dieser Ebene verschieben.

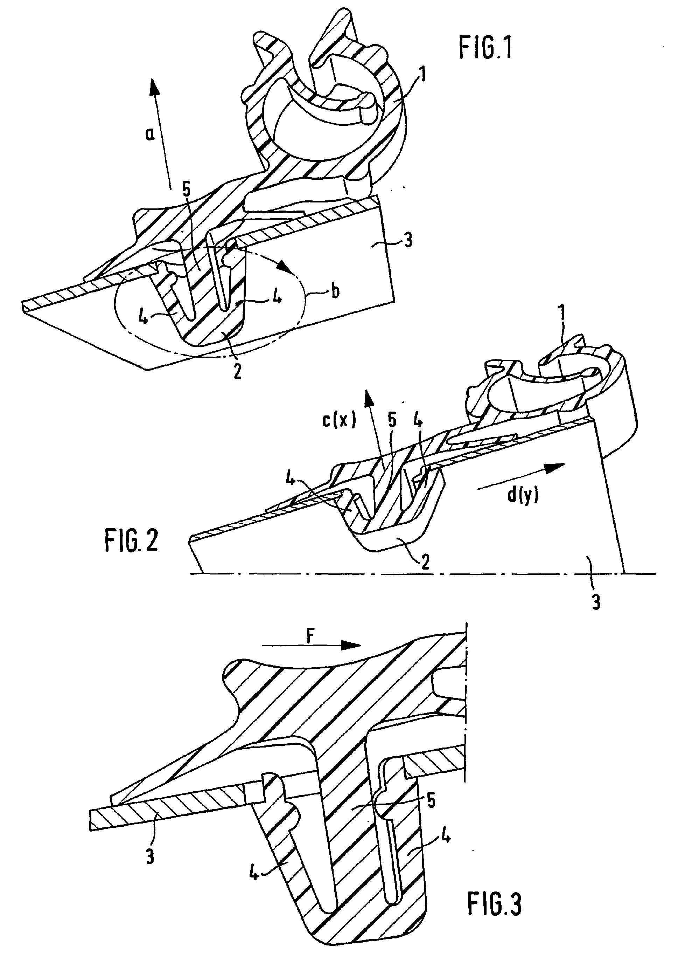

In den Figuren 1 und 2 der anhängenden Zeichnung sind diese Bewegungsmöglichkeiten eines Ankerfußes **2** am Beispiel eines Befestigungselements der eingangs genannten Art, bestehend aus Halterungsteil **1** und Ankerfuß schematisch dargestellt. Der Ankerfuß **2** ist in einer durchgehenden Bohrung eines Trägerteils **3** bereits verankert; er kann die Bewegung in den Freiheitsgraden a, c und d, also in Achsrichtung und in der Ebene quer zu seiner Achse begrenzen, die Drehung um seine Achse, Freiheitsgrad b, dagegen nicht. Fälschlicherweise wurde bisher angenommen, dass die zuverlässige Funktion des Ankerfußes, d.h. die sichere, unbeabsichtigt nicht lösbare Verankerung im Trägerteil **3** nur auf der Wirkung der beiden Federarme **4** beruht. Die Federarme **4** begrenzen aber nur die Bewegung in Achsrichtung (Freiheitsgrad a). Die Begrenzung in der Ebene (Freiheitsgrade c und d) müßte eigentlich vom Schaft **5** übernommen werden. Dieser Umstand wurde bisher nicht erkannt bzw. besonders bei Befestigungselementen, die zur Verankerung in Bohrungen mit unterschiedlichem Durchmesser geeignet sein sollen, nicht genügend berücksichtigt, denn der Schaft ist bei bekannten Befestigungselementen dieser Art so geformt und dimensioniert, dass es bei einer seitlichen Beanspruchung des Befestigungselements, z.B. in Richtung des Pfeiles F in Fig. 3, zum Aushaken der Federarme **4** kommen kann und der Ankerfuß **2** seinen Halt in der Bohrung des Trägerteils **3** verliert. Dies ist in Fig. 3 schematisch wiedergegeben.

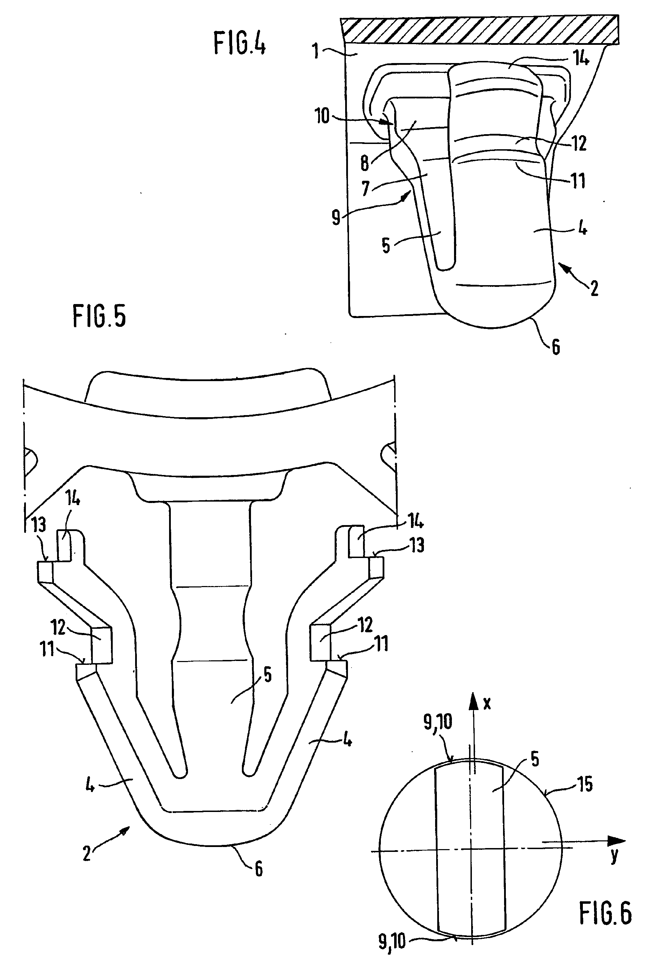

Um diesem Umstand gerecht zu werden, weist der bei seinem Einsatz durch eine Bohrung in einem Trägerteil ragende Ankerfuß **2,** gemäß Fig. 4 einen auf seiner Mittelachse liegenden, in einer Richtung abgeflachten Schaft **5** auf. In der anderen, dazu senkrechten Richtung erweitert sich der Schaft **5** von seinem freien Ende **6** aus konisch bis auf eine Breite, die dem Durchmesser einer ersten Bohrung, von z.B. 0,5 mm, in einem Trägerteil entspricht. Hier ist der konische Verlauf zunächst unterbrochen, und es schließt sich ein Abschnitt **7** an, der an seinen beiden Schmalseiten jeweils eine teilzylindrische Anlagefläche **9,** die an der Innenwand dieser ersten Bohrung eng zur Anlage kommen kann. Danach erweitert sich der Schaft **5** nochmals konisch bis auf eine Breite, die dem Durchmesser einer zweiten Bohrung, von z.B. 6,8 mm, in einem Trägerteil entspricht, und wieder schließt sich ein Abschnitt **8** mit einer teilzylindrischen Anlagefläche **10** an, die dann an der Innenwand dieser zweiten Bohrung zur Anlage kommen kann. Dieser Abschnitt **8** geht über in die Verbindung mit dem Halterungsteil **1.** Beide Abschnitte **7** und 8 mit den teilzylindrischen Anlageflächen **9** und **10** haben eine Höhe, die der Dicke eines Trägerteils entspricht.

An den beiden Flachseiten gehen von dem freien Ende **6** des Schafts **5** zwei einander gegenüberliegende, sich in Richtung auf das Halterungsteil **1** konisch aufspreizende Federarme **4** aus. In Höhe des ersten teilzylindrischen Abschnitts 7 des Schafts **5** weisen beide Federarme **4** eine erste Stufe **11** auf (siehe auch Fig. 5), an die sich jeweils eine durch die Stufe **11** radial zurückgesetzte, ebenfalls teilzylindrische Anlagefläche **12** für die Bohrung mit dem kleineren Durchmesser anschließt. Danach spreizen sich die Federarme **4** weiter bis auf die Höhe des zweiten teilzylindrischen Abschnitts **8** des Schafts **5,** wo durch eine zweite Stufe **13** jeweils eine weitere teilzylindrische Anlagefläche **14** für die Bohrung mit dem größeren Durchmesser entsteht.

An diesem Ankerfuß **2** sind somit für jede der beiden Bohrungsgrößen vier um jeweils 90° versetzte Anlageflächen **9, 10, 12, 14** ausgebildet. Wird der Ankerfuß **2** in die engere Bohrung eines Trägerteils **3** eingesetzt, so kommen die Federarme **4** mit ihren ersten Anlageflächen **12** an der Wand der Bohrung federnd zur Anlage, wobei die erste Stufe **11** das Trägerteil **3** hintergreift. Gleichzeitig kommen um 90° versetzt auch die ersten Anlageflächen **9** des Schafts **5** an der Wand der Bohrung zur Anlage. Entsprechendes gilt für die zweite Anlagefläche **14** und zweite Stufe **13** der Federarme **4** und die zweiten Anlageflächen **10** des Schafts **5** beim Einsatz des Ankerfußes **2** in die Bohrung mit dem größeren Durchmesser.

Die Stufen **11** und **13** der Federarme **4** begrenzen in bekannter Weise die Bewegung des Ankerfußes **2** in axialer Richtung. Durch die Anlageflächen **9** und **10** des Schafts **5** wird nun aber auch die Bewegung des Ankerfußes **2** in der Ebene senkrecht zur Achsrichtung zuverlässig begrenzt, so dass es auch bei einer seitlichen Beanspruchung des Ankerfußes **2** nicht zu einem Aushaken der Federarme **4** kommen kann, die Verankerung also immer sicher und wackelfrei bleibt. Diese Wirkung des wie oben beschrieben ausgebildeten Schafts **5** ist in Fig. 6 schematisch verdeutlicht. Indem die Anlageflächen **9** oder **10** des Schafts **5** eng bzw. mit nur ganz geringem Spiel an der Bohrungswand **15** anliegen, wird die Bewegung des Ankerfußes **2** in der Ebene in x- und y-Richtung begrenzt.

### Bezugiszeichenliste:

- 1: Halterungsteil
- 2: Ankerfuß
- 3: Trägerteil
- 4: Federarme
- 5: Schaft
- 6: freies Ende
- 7: erster Abschnitt am Schaft
- 8: zweiter Abschnitt am Schaft
- 9: erste teilzylindrische Anlageflächen des Schafts
- 10: zweite teilzylindrische Anlageflächen des Schafts
- 11: erste Stufe
- 12: erste Anlageflächen am Federarm
- 13: zweite Stufe
- 14: zweite Anlagefläche am Federarm
- 15: Bohrungswand

## Patentansprüche

1. Befestigungselement zur Befestigung eines Bauteils an einem Trägerteil **(3)** mit einem Halterungsteil **(1)** für das zu befestigende Bauteil und einem Ankerfuß **(2),** mit dem das Befestigungselement in einer durchgehenden Bohrung des Trägerteils **(3)** verankerbar ist, wobei der Ankerfuß **(2)** einen vom Halterungsteil **(1)** senkrecht abragenden Schaft **(5)** und zwei einander gegenüberstehende, an ihren einen Enden mit dem Schaftende verbundene und sich in Richtung auf das Halterungsteil **(1)** aufspreizende Federarme **(4)** aufweist, an deren Außenflächen durch Stufen **(11, 13)** zurückgesetzte, einander gegenüberliegende Anlageflächen **(12, 14)** ausgebildet sind, die beim Einsetzen des Ankerfußes **(2)** in die Bohrung des Trägerteils **(3)** bei gleichzeitigem Hintergreifen des Bohrungsrandes durch die Stufen **(11, 13)** an der Wand der Bohrung federnd zur Anlage kommen,
**dadurch gekennzeichnet,**
**dass** an den sich konisch aufspreizenden Federarmen **(4)** in verschiedenen Höhen durch Stufen **(11, 13)** radial zurückgesetzte, einander gegenüberliegende Anlageflächen **(12, 14)** paarweise angeordnet sind, deren Krümmungen unterschiedlich sind, und dass der Schaft **(5)** in denselben Höhen, aber gegenüber den Federarmen **(4)** um jeweils 90° versetzt, teilzylindrische, in ihren Krümmungen den Krümmungen der Anlageflächen **(12, 14)** der Federarme **(4)** auf gleicher Höhe entsprechende Anlageflächen **(9, 10)** aufweist, die beim Einsetzen des Ankerfußes **(2)** in die Bohrung des Trägerteils **(3)** an der betreffenden Bohrungswand **(15)** zur Anlage kommen.

2. Befestigungselement nach Anspruch 1, **dadurch gekennzeichnet, dass** an den Federarmen **(4)** und dem Schaft **(5)** Anlageflächen **(12, 14, 9, 10)** mit zwei unterschiedlichen Krümmungen angeordnet sind.

3. Befestigungselement nach Anspruch 1, **dadurch gekennzeichnet, dass** der Schaft **(5)** als zwischen den Federarmen **(4)** stehender Flachkörper ausgebildet ist, der sich an seinen beiden Schmalseiten von seinem freien Ende **(6)** aus konisch bis auf den Durchmesser einer ersten Krümmung erweitert, daran anschließend einen Abschnitt **(7)** mit einer teilzylindrischen, der Bohrungswand **(15)** der ersten Krümmung folgenden Anlagefläche **(9)** und einer Höhe aufweist, sich dann bis auf den Durchmesser einer zweiten Krümmung erweitert und daran anschließend einen Abschnitt **(8)** mit einer teilzylindrischen, der zweiten Krümmung folgenden Anlagefläche **(10)** und der Höhe der Anlagefläche **(9)** mit der ersten Krümmung aufweist.

## Claims

1. Fastening element for fastening a component on a support member (3) with a holder member (1) for the component to be fastened and an anchor foot (2) with which the fastening element can be anchored in a through bore of the support member (3), wherein the anchor foot (2) has a shaft (5) projecting perpendicularly from the holder member (1) and two mutually opposed sprung arms (4) linked at their one end to the shaft end and splayed in the direction of the holder member (1), said sprung arms having contact surfaces (12, 14) on their outer surfaces, set back by means of steps (11, 13) and mutually opposed, said contact surfaces, on insertion of the anchor foot (2) into the bore of the support member (3), coming into sprung contact with the wall of the bore and simultaneously engaging behind the bore edge by means of the steps (11, 13), **characterised in that** arranged on the conically splayed sprung arms (4) at various heights are contact surfaces (12, 14), set back radially by means of steps (11, 13) and arranged mutually opposed in pairs, the curvature of said contact surfaces being mutually different, and that the shaft (5) has partial cylindrical contact surfaces (9, 10) at the same heights, but offset in each case by 90° relative to the sprung arms (4), corresponding in their curvatures to the curvatures of the contact surfaces (12, 14) of the sprung arms (4) at the same height, which support surfaces (12, 14), on insertion of the anchor foot (2) into the bore of the support member (3), come to lie against the relevant bore wall (15).

2. Fastening element according to claim 1,
**characterised in that** contact surfaces (12, 14, 9, 10) with two different curvatures are arranged on the sprung arms (4) and the shaft (5).

3. Fastening element according to claim 1, **characterised in that** the shaft (5) is designed as a flat body arranged between the sprung arms (4), said flat body expanding conically at both its narrow sides from its free end (6) to the diameter of a first curvature, having adjoining this a section (7) with a partial cylindrical contact surface (9) following the bore wall (15) of the first curvature and a height, then expanding to the diameter of a second curvature, and then subsequently a section (8) with a partial cylindrical contact surface (10) following the second curvature and the height of the contact surface (9) with the first curvature.

## Revendications

1. Organe de fixation pour la fixation d'un élément de construction sur une pièce formant support (3), se composant d'un élément de retenue (1) pour le maintien de l'élément de construction à fixer et d'une patte d'ancrage (2), au moyen de laquelle l'organe de fixation est destiné à être ancré dans un perçage débouchant de la pièce formant support (3), la patte d'ancrage (2) se composant en l'occurrence d'une tige (5) faisant verticalement saillie depuis l'élément de retenue (1) et d'au moins deux pattes élastiques (4) diamétralement opposées, reliées au niveau d'une de leurs extrémités à l'extrémité de la tige et allant en s'écartant en direction de l'élément de retenue (1), sur les surfaces extérieures desquelles sont définies des faces d'assise (12, 14) diamétralement opposées, respectivement déportées en retrait au niveau de leurs faces extérieures par des décrochements (11, 13) qui, lors de l'introduction de la patte d'ancrage (2) dans le perçage de la pièce formant support (3), viennent en contact d'appui, par effet élastique, contre la paroi du perçage, tout en venant cramponner par derrière le bord du perçage au niveau des décrochements 11, 13), **caractérisé en ce que** sur les pattes d'ancrage (4) s'écartant suivant un tracé conique sont disposées par paires, à différentes hauteurs, des faces d'assise (12, 14) se faisant respectivement face, déportées en retrait dans le plan radial par des décrochements (11, 13), dont les courbures sont différentes et **en ce que** la tige (5) comporte, disposées aux mêmes hauteurs mais respectivement décalées de 90° par rapport aux pattes élastiques (4), des faces d'assise (9, 10) de forme partiellement cylindrique, dont les courbures correspondent, à même hauteur, aux courbures des faces d'appui (12, 14) des pattes élastiques (4) qui, lors de l'emmanchement de la patte d'ancrage (2) dans le perçage de la pièce formant support (3), viennent en contact d'appui avec la paroi (15) respectivement concernée du perçage.

2. Organe de fixation selon la revendication 1, **caractérisé en ce que** sur les pattes élastiques (4) et sur la tige (5) sont prévues des faces d'assise (12, 14, 9, 10) présentant deux courbures différentes.

3. Organe de fixation selon la revendication 1, **caractérisé en ce que** la tige (5) se présente sous la forme d'un élément aplati se dressant entre les pattes élastiques (4) qui, au niveau de ses deux petits côtés va, en partant de son extrémité libre (6), en s'évasant suivant un tracé conique jusqu'à correspondre au diamètre d'une première courbure, se poursuit, selon une disposition attenante, par une portion (7) comportant une face d'assise (9) de forme partiellement cylindrique qui épouse la paroi (15) de la première courbure, et présente une certaine hauteur, qui s'évase ensuite jusqu'à atteindre une cote correspondant au diamètre d'une deuxième courbure et qui comporte ensuite, attenante à celle-ci, une portion (8) avec une face d'assise (10) de forme partiellement cylindrique qui épouse la géométrie de la deuxième courbure et correspond à la hauteur de la face d'assise (9) de la première courbure.
